# EUROPEAN PATENT APPLICATION

(11) **EP 3 139 355 A1**
(43) Date of publication of application: **08.03.2017**
(21) Application number: 16184812.2
(22) Date of filing: 18.08.2016
(51) Int. Cl.: G07C 9/00, B60R 25/04, G08B 25/00

(54) **ONE-BUTTON VEHICLE SECURITY SYSTEM**

(30) Priority: 24.08.2015 US 201514833436
(71) Applicant: Delphi Technologies, Inc., Troy, MI 48007 (US)
(72) Inventor: DAVIS, Roger J., Russiaville, IN 46979 (US)
(74) Representative: Delphi France SAS

(57) **Abstract**

A one-button-security system (10) suitable for use on an automated vehicle (14) includes a single-action input-device (18), a vehicle-device (20), a facility-device (26), and a controller (36). The single-action input-device (18) is operable by an operator (12) to indicate that a vehicle (14) is being parked. The vehicle-device (20) is installed on the vehicle (14). The vehicle-device (20) is operable to a driving-state (22) useful when the vehicle (14) is driven, and operable to a parked-state (24) useful when the vehicle (14) is parked. The facility-device (26) is installed at a facility (16) where the vehicle (14) can be parked. The facility-device (26) is operable to an away-state (28) useful when the vehicle (14) is not parked at the facility (16), and operable to a home-state (30) useful when the vehicle (14) is parked at the facility (16). The controller (36) is in communication with the input-device (18), the vehicle-device (20), and the facility-device (26). The controller (36) is configured to, in response to operation of the input-device (18), operate the vehicle-device (20) to the parked-state (24) and the facility-device (26) to the home-state (30).

## Description

### TECHNICAL FIELD

This disclosure generally relates to a one-button-security system, and more particularly relates to vehicle security systems where both a vehicle-device is operated to a parked-state and a facility-device is operated to a home-state in response to the operation of a one-touch or single-action input-device.

### BACKGROUND OF INVENTION

Every time a vehicle is parked an operator of a vehicle may want to perform several tasks such as closing the windows or sun-roof of the vehicle, and moving the drivers-seat back and the hand-wheel up so the vehicle is easier to exit. If the operator has arrived at a secured facility such as the home of the operator or a workplace of the operator, facility security systems may need to be operated to allow entry into the facility without unnecessarily activating a facility-alarm. Daily repetition of these multiple tasks is undesirably tedious.

### SUMMARY OF THE INVENTION

In accordance with one embodiment, a one-button-security system is provided. The system includes a single-action input-device, a vehicle-device, a facility-device, and a controller. The single-action input-device is operable by an operator to indicate that a vehicle is being parked. The vehicle-device is installed on the vehicle. The vehicle-device is operable to a driving-state that is useful when the vehicle is driven, and operable to a parked-state that is useful when the vehicle is parked. The facility-device is installed at a facility where the vehicle can be parked. The facility-device is operable to an away-state that is useful when the vehicle is not parked at the facility, and operable to a home-state that is useful when the vehicle is parked at the facility. The controller is in communication with the input-device, the vehicle-device, and the facility-device. The controller is configured to, in response to operation of the input-device, operate the vehicle-device to the parked-state and the facility-device to the home-state.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a vehicle and facility equipped with a one-touch security-system in accordance with one embodiment; and
Fig. 2 is a diagram of the system of Fig. 1 in accordance with one embodiment.

### DETAILED DESCRIPTION

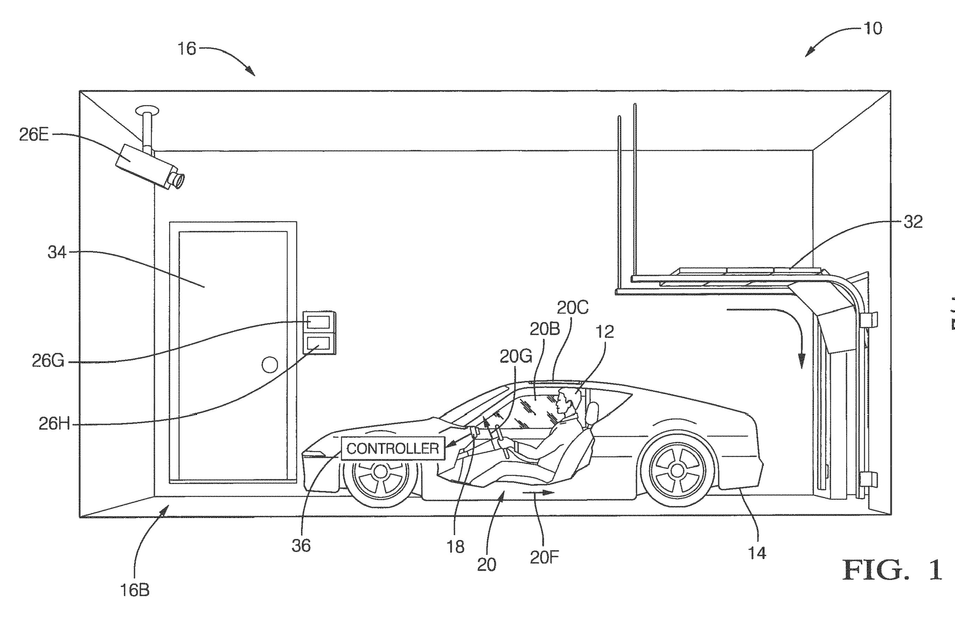

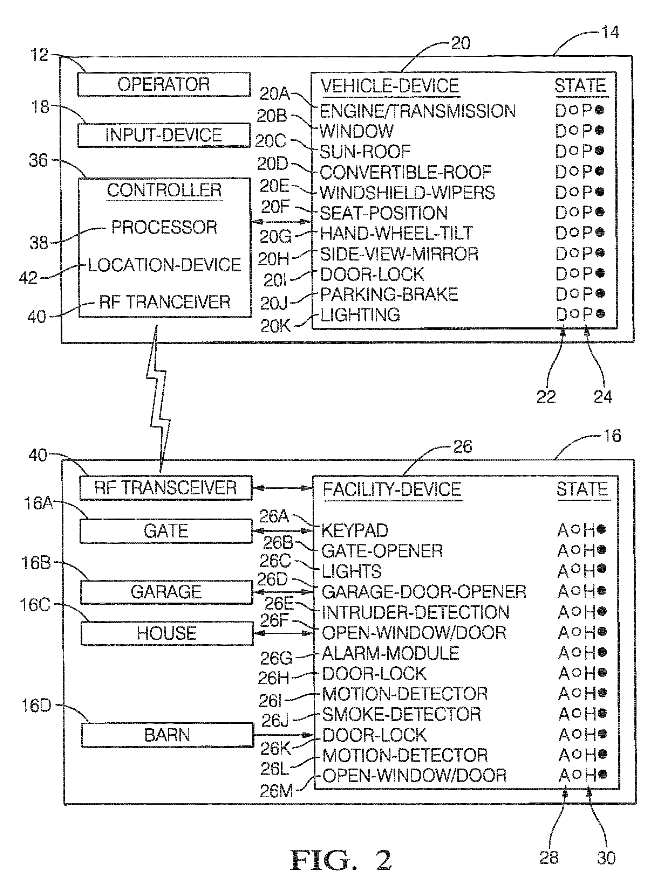

Figs. 1 and 2 illustrate non-limiting examples of a one-button-security system, hereafter referred to as the system 10. The system 10 overcomes the problems described above by providing a simplified means for an operator 12 of a vehicle 14 to initiate actions by various devices associated with the vehicle 14 and a facility 16 such as a home or workplace of the operator 12. To this end, the system 10 advantageously includes a single-action input-device 18 operable by the operator 12 to indicate, for example, that the vehicle 14 is being parked at the facility 16. The input-device 18 may be, but is not limited to, a single pushbutton, single touch-sensitive switch, or a specific icon on a touch-sensitive display. As used herein, the characterization of the input-device 18 as single-action means that the operator 12 only needs to perform a single task such as a single pressing or single touching (i.e. one-touch) of the input-device 18 to initiate multiple actions by various devices operable by the system 10, as will be described in more detail below. As will also be explained by way of non-limiting examples, it is contemplated that the various actions performed by various devices of the system 10 may be performed simultaneously when appropriate, or may be performed in a sequential manner where a first task or step is completed before a second task or step is initiated.

The system 10 includes one or more instances of a vehicle-device 20 installed on the vehicle 14. In general, each instance of the vehicle-device 20 is operable to a driving-state 22 (D) that is characterized as useful when the vehicle 14 is being operated or driven by the operator 12, or being driven by an automated vehicle system, which is not shown but will be recognized by those in the autonomous-vehicle or automated-vehicle arts. The vehicle-device 20 is also operable to a parked-state 24 (P) that is characterized as useful when the vehicle 14 is parked. While all of the instance of the vehicle-device 20 in Fig. 2 are shown as being in the parked-state 24 as indicated by the filled-in dot next to each 'P', it is contemplated that situations may arise where some instances of the vehicle-device 20 are in the driving-state 22, and some instance of the vehicle-device 20 are in the parked-state 24. By way of example and not limitation, the vehicle-device 20 may include an engine and a transmission, hereafter the engine/transmission 20A. When the engine is off (i.e. not running), and the transmission is in PARK, the engine/transmission 20A indicated in Fig. 2 is in the parked-state 24 (P).

Additional non-limiting examples of the vehicle-device 20 are shown in Fig. 2. It is contemplated that the operator 12 will program or indicate how the various instances of the vehicle-device 20 are to be operated to put each instance of the vehicle-device 20 into either the driving-state 22 or the parked-state 24. By way of further non-limiting examples, the vehicle-device 20 may include: a vehicle-window actuator 20B where the window is manually operable while in the driving-state 22 (D) and automatically closed when the parked state 24 (P) is selected; a sun-roof actuator 20C where the sun-roof is manually operable when D is selected and automatically closed when P is selected; a convertible-roof actuator 20D where the convertible-roof is manually operable when D is selected and automatically closed when P is selected; a windshield-wiper actuator 20E where the windshield-wipers are operable when D is selected and turned off when P is selected; a seat-position actuator 20F where the seat is manually operable when D is selected and moved back to an exit-position when P is selected; a hand-wheel-tilt actuator 20G where the hand-wheel is manually tiltable when D is selected and automatically moved up to an exit-position when P is selected; a side-view-mirror actuator 20H where the side-view mirror is manually operable when D is selected and automatically folded in when P is selected; a vehicle-door-lock actuator 20I where the vehicle-door-lock is manually operable when D is selected and automatically unlocked when P is selected; a parking-brake actuator 20J where the parking-brake is released when D is selected and automatically engaged when P is selected; and a vehicle-lighting module 20K where the lighting is manually operable when D is selected and automatically activated for a selected period of time when P is selected and ambient lighting is low (e.g. it is dark).

The system 10 includes one or more instances of a facility-device 26 installed at the facility 16 where the vehicle 14 can be parked. In general, the facility-device 26 is operable to an away-state 28 (A) that is useful when the vehicle 14 is not parked at the facility 16, and is operable to a home-state 30 (H) that is useful when the vehicle 14 is parked at the facility 16. As suggested above, the facility 16 may be a home, business, or workplace of the operator 12. As such, it is presumed that the operator 12 is authorized to access the facility 16, and operate (e.g. arm or enable / disarm or disable) a facility-security portion of the system 10. By way of example and not limitation, the facility 16 may include a gate 16A that selectively obstructs a driveway to the facility 16, a garage 16B where the vehicle 14 can be parked, an office-space or a house 16C that the operator 12 may enter after parking the vehicle 14, and an additional building such as a barn 16D that may be monitored by the facility-security portion of the system 10.

The gate 16A may be coupled to a keypad 26A that activates a gate-opener 26B to open or close the gate 16A, and/or activates lights 26C in or about the facility 16. The garage 16B may be equipped with a garage-door-opener 26D to open or close a garage-door 32 (Fig. 1) so the vehicle 14 can enter the garage 16B. The garage 16B may also be equipped with an intruder-detection device 26E such as a camera so the facility-security portion of the system 10 is able to determine if the garage 16B is safe to enter. An entry-door 34 of the house 16C may be equipped with a door-lock actuator 26H that may be electrically operated by a facility-alarm-module 26G. The facility-alarm-module 26G may also be coupled to an open window/door sensor 26F, a motion-detector 26I, and/or a smoke-detector 26J as will be recognized by those in the security-system arts. The barn 16D may be equipped with similar devices such as a door-lock actuator 26K, a motion-detector 26L, and/or an open window/door sensor 26M. When an instance of the facility-device 26 is operated to the away-state 28 (A), the device in question is preferably operated in a manner suited to protect the facility 16 from, for example, unauthorized entry by an intruder. As a specific example, the motion-detector 26I may be activated to detect the presence of an intruder when operated to the away-state 28 (A). By contrast, when an instance of the facility-device 26 is operated to the home-state 30 (H), the device in question is preferably operated in a manner suited to having the operator 12 move (e.g. walk) about the facility. As a further non-limiting example, the garage-door-opener 26D may be operated by the system 10 open the garage-door 32 when the operator 12 is away (A) so packages can be delivered to inside the garage 16B, and close the garage-door 32 when the operator is home (H) to better protect the operator 12 from intruders.

The system 10 also includes a controller 36 in communication with the input-device 18, the vehicle-device 20, and the facility-device 26. While the non-limiting examples illustrated in Figs. 1 and 2 show the controller 36 as part of the vehicle 14, it is contemplated that the controller 36 could be located at the facility 16, or be a virtual controller that communicates wirelessly with both the vehicle 14 and the facility 16. Accordingly, the system 10 may include RF transceivers 40 for wireless communication. In this example the vehicle 14 is equipped with one of the RF transceivers 40 so the controller 36 can communicate wirelessly with another of the RF transceivers 40 associated with the facility-protection portion of the system 10. The controller 36 may include a processor 38 such as a microprocessor or other control circuitry such as analog and/or digital control circuitry including an application specific integrated circuit (ASIC) for processing data as should be evident to those in the art. The controller 36 may include memory, including non-volatile memory, such as electrically erasable programmable read-only memory (EEPROM) for storing one or more routines, thresholds and captured data. The one or more routines may be executed by the processor 38 to perform steps for operating one or more instances of the vehicle-device 20 and the facility-device 26 as described herein.

In order for the system 10 to determine when the vehicle 14 is proximate to the facility 16, the system 10 may include a location-device 42, and the controller 36 may be configured determine when the vehicle 14 is located at or proximate to the facility 16. The location-device 42 may be a global-position-sensor (GPS) type device, or the location-device 42 may determine the location of the vehicle 14 relative to the facility 16 based on signals from the facility 16 that indicate when, for example, the intruder-detection device 26E detects that the vehicle 14 is within the garage 16B. Once the system 10 'knows' that the vehicle 14 is within the garage 16B for example, the system 10 may then, and preferably only then, operate the vehicle-device 20 to the parked-state 24 and the facility-device 26 to the home-state 30.

By way of a generic non-limiting example, the controller 36 may be configured to, in response to operation of the input-device18, operate one or more instances of the vehicle-device 20 to the parked-state 24, and operate one or more instances of the facility-device to the home-state 30. In some instances, simultaneous operation of the vehicle-device 20 and the facility-device 26 may be preferable. For example, if the engine/transmission 20A is operated to the driving-state 22, the engine may be started, so it may be preferable that opening of the garage-door 32 be initiated at the same time. However, in some instance it may be advantageous if operating the vehicle-device 20 to the parked-state 24 includes performing a first-step (e.g. turn-off the engine/transmission 20A) during a first-time-interval, and operating the facility-device 26 to the home-state 30 includes performing a second-step (e.g. close the garage-door 32 by operating the garage-door-opener 26D) during a second-time-interval that does not overlap the first-time-interval. That is, the closing of the garage-door 32 may be preferable not started until after the engine/transmission is turned off so exhaust gases are not trapped in the garage 16B.

As another non-limiting example of how the system 10 may operate both an instance of the vehicle-device 20 and an instance of the facility-device 26, the controller 36 may be configured to operate a garage-door-opener 26D to the home-state to close a garage-door 32, and operate a vehicle-door-lock actuator 20I of the vehicle to the parked-state 24 to unlock a vehicle-door of the vehicle only after the garage-door 32 is in the closed-state.

As another non-limiting example, the controller 36 may be configured to operate an intruder-detection-device 26E to the away-state 28 to detect an intruder in the facility, and operate a vehicle-door-lock actuator 20I of a vehicle-door to prevent unlocking of a vehicle-door if an intruder is detected.

As yet another non-limiting example, the controller 36 may be configured to operate the engine/transmission 20A to the parked-state 24, operate a motion-detector 26I to the away-state 28 to detect when the operator 12 exits the vehicle 14, and operate a facility-alarm-module 26G of the facility 16 to the home-state 30 after the operator exits the vehicle.

Accordingly, a one-button-security system (the system 10), and a controller 36 for the system 10 is provided. The system 10 and the controller 36 are programmable or configurable to perform, in response to a single pressing of a button, a sequence of steps or actions that previously required an operator of a vehicle and a facility to press a variety of buttons. Previously, an operator had to perform separate actions (pressing of multiple buttons) to turn-off the engine, roll-up the windows, and close the sun-roof of a vehicle, and then another pressing of multiple buttons to close a garage door, unlock an entry door, and operate a keypad to disarm a facility alarm-module. The system 10 describe herein provides for coordinating and performing all of these distinct tasks is response to pressing a single button.

While this invention has been described in terms of the preferred embodiments thereof, it is not intended to be so limited, but rather only to the extent set forth in the claims that follow.

## Claims

1. A one-button-security system (10), said system (10) comprising:
a single-action input-device (18) operable by an operator (12) to indicate that a vehicle (14) is being parked;
a vehicle-device (20) installed on the vehicle (14), said vehicle-device (20) operable to a driving-state (22) useful when the vehicle (14) is driven, and operable to a parked-state (24) useful when the vehicle (14) is parked;
a facility-device (26) installed at a facility (16) where the vehicle (14) can be parked, said facility-device (26) operable to an away-state (28) useful when the vehicle (14) is not parked at the facility (16), and operable to a home-state (30) useful when the vehicle (14) is parked at the facility (16); and
a controller (36) in communication with the input-device (18), the vehicle-device (20), and the facility-device (26), said controller (36) configured to, in response to operation of the input-device (18), operate the vehicle-device (20) to the parked-state (24) and the facility-device (26) to the home-state (30).

2. The system (10) in accordance with claim 1, wherein the system (10) includes a location-device (42), the controller (36) is configured determine when the vehicle (14) is located at the facility (16), and operate the vehicle-device (20) to the parked-state (24) and the facility-device (26) to the home-state (30) when the vehicle (14) is located at the facility (16).

3. The system (10) in accordance with claim 1 or 2, wherein the vehicle-device (20) is one or more of a vehicle-window actuator (20B), a sun-roof actuator (20C), a convertible-roof actuator (20D), a windshield-wiper actuator (20E), a seat-position actuator (20F); a hand-wheel-tilt actuator (20G), a side-view-mirror actuator (20H), a vehicle-door-lock actuator (20I), a parking-brake actuator (20J), and a vehicle-lighting module (20K).

4. The system (10) in accordance with any one of claims 1 to 3, wherein the facility-device (26) is one or more of a garage-door-opener (26D), an entry-door (34)-lock actuator, a facility-alarm-module (26G), an intruder-detection-device (26E), and a motion-detector (26I).

5. The system (10) in accordance with any one of claims 1 to 4, wherein the controller (36) is configured to operate a garage-door-opener (26D) to the home-state (30) to close a garage-door (32), and operate a vehicle-door-lock actuator (20I) of the vehicle (14) to the home-state (30) to unlock a vehicle (14)-door of the vehicle (14) only after the garage-door (32) is closed.

6. The system (10) in accordance with any one of claims 1 to 5, wherein the controller (36) is configured to operate an intruder-detection-device (26E) to the away-state (28) to detect an intruder in the facility (16), and operate a vehicle-door-lock actuator (20I) of a vehicle (14)-door to the away-state (28) to prevent unlocking of a vehicle (14)-door if an intruder is detected.

7. The system (10) in accordance with any one of claims 1 to 6, wherein the controller (36) is configured to operate an engine/transmission (20A) of the vehicle (14) to the parked-state (24), operate a motion-detector (26I) to the away-state (28) to detect when the operator (12) exits the vehicle (14), and operate a facility-alarm-module (26G) of the facility (16) to the home-state (30) after the operator (12) exits the vehicle (14).

8. The system (10) in accordance with any one of claims 1 to 7, wherein operating the vehicle-device (20) to the parked-state (24) includes performing a first-step during a first-time-interval, and operating the facility-device (26) to the home-state (30) includes performing a second-step during a second-time-interval that does not overlap the first-time-interval.
